# EUROPÄISCHE PATENTSCHRIFT

(11) **EP 3 002 921 B1**
(45) Veröffentlichungstag und Bekanntmachung des Hinweises auf die Patenterteilung: **31.10.2018**
(21) Anmeldenummer: 14186960.2
(22) Anmeldetag: 30.09.2014
(51) Int. Cl.: H04L 29/06, H04L 29/08, G05B 19/02

(54) **GERÄTEVORRICHTUNG FÜR EINE AUTOMATISIERUNGSANLAGE**
APPLIANCE DEVICE FOR AN AUTOMATION SYSTEM
DISPOSITIF D'APPAREIL POUR UNE INSTALLATION D'AUTOMATISATION

(43) Veröffentlichungstag der Anmeldung: 06.04.2016
(73) Patentinhaber: Siemens Aktiengesellschaft, 80333 München (DE)
(72) Erfinder: Deiretsbacher, Karl-Heinz, 91090 Effeltrich (DE); Erlmann, Markus, 95336 Mainleus (DE); Kerschbaum, Sven, 90768 Fürth (DE); Volkmann, Frank, 90475 Nürnberg (DE)

(56) Entgegenhaltungen:
- DE-A1-102004 006 546
- US-A1- 2004 186 918
- US-A1- 2010 281 097
- US-A1- 2013 070 788

## Beschreibung

Die Erfindung betrifft eine Gerätevorrichtung für eine Automatisierungsanlage gemäß des Anspruchs 1. Zu der Erfindung gehört auch ein Verfahren zum Betreiben der erfindungsgemäßen Gerätevorrichtung in der Automatisierungsanlage gemäß des Anspruchs 9. Vorteilhafte Weiterbildungen der erfindungsgemäßen Gerätevorrichtung werden durch die Merkmale der abhängigen Ansprüche 2-8 definiert.

In automatisierungstechnischen Anlagen besteht die Notwendigkeit, zwischen unterschiedlichen Gerätevorrichtungen Prozessinformationen, also aktuelle Werte zu einzelnen Prozessparametern, auszutauschen. Beispielsweise kann es notwendig sein, dass eine Gerätevorrichtung eine aktuelle Temperatur oder einen aktuellen Druck über ein Datennetzwerk an eine andere Gerätevorrichtung meldet. Hierfür hat sich das Standardprotokoll OPC Unified Automation/Architecture (OPC UA) der OPC-Foundation etabliert.
OPC UA ist ein Standardprotokoll. Daher liegt es in der Natur der Sache, dass nur allgemeingültige Probleme und Aufgaben vom Protokoll abgedeckt oder adressiert werden. In der Praxis gibt es jedoch häufig die Notwendigkeit, diesen allgemeingültigen Teil mit fach- oder aufgabespezifischen Teilen zu erweitern, also nonkonforme Ergänzungen bei einer Gerätevorrichtung vorzunehmen, die nicht mittels des Standardprotokolls übermittelt werden können. Beispielsweise kennt OPC UA nicht die Möglichkeit, dass eine Gerätevorrichtung als Server für Prozessinformationen ohne eine vorherige Anforderung durch eine andere Gerätevorrichtung, die ein Client zu dem Server ist, Nachrichten an diesen Client übermittelt, beispielsweise zum Mitteilen einer Werteänderung eines der Prozesswerte. Gemäß OPC UA gilt das Prinzip, keine Antwort oder Benachrichtigung ohne vorherige Anfrage. In der Praxis gibt es aber Fälle, wo dies vorteilhaft wäre, wenn beispielsweise das Datennetzwerk ein Funknetzwerk für eine mobile Umgebung ist. Hier benötigt der Client für das Senden der Anforderung erhebliche Energie, die insbesondere kleine Gerätevorrichtungen, wie beispielsweise einzelne Sensoren, nur unter erheblichem technischem Mehraufwand bereitstellen können.
Die OPC Foundation liefert einen Standard für einen OPC-UA-Kommunikationsstack oder kurz OPC-UA-Stack. Durch einen Kommunikationsstack ist ein Ablauf einer Kommunikation zwischen einer Gerätevorrichtung und einer weiteren Gerätevorrichtung geregelt oder vorgegeben. Der OPC-UA-Stack sollte nicht verändert werden, um eine standardkonforme Kommunikation mit der anderen Gerätevorrichtung zu gewährleisten.
Andererseits ist man daran interessiert, die Gerätefunktionen einer Gerätevorrichtung in der beschriebenen Weise ständig zu erweitern und zu verbessern. Hierbei kann es das Problem geben, dass eine über den Standard hinausgehende Gerätefunktion nicht von anderen Gerätevorrichtungen genutzt werden kann, weil der standardgemäße OPC-UA-Stack die zum Steuern der neuartigen Gerätefunktion nötigen Sonderdaten nicht übertragen kann.

Mit Blick auf den bekannten Stand der Technik wird auf die Patentanmeldung US2013/070788 verwiesen, in der die Möglichkeit der fallweisen, alternativen Verwendung des standardisierten OPC-UA Protokolls bzw. eines Streamingprotokolls, z.B. MSRP/SRP, mittels entsprechender Protokollstacks offenbart wird.

Der Erfindung liegt die Aufgabe zugrunde, in einer Gerätevorrichtung einer Automatisierungsanlage sowohl eine standardkonforme als auch eine nonkonforme, also nicht dem Standard entsprechende Kommunikation zu unterstützen.
Die Aufgabe wird durch die Gegenstände der unabhängigen Patentansprüche gelöst. Vorteilhafte Weiterbildungen der Erfindung ergeben sich durch die Merkmale der abhängigen Patentansprüche.
Erfindungsgemäß bereitgestellt wird eine Gerätevorrichtung für eine Automatisierungsanlage gemäß der Ansprüche 1-8. Wie bereits erläutert, kann die Gerätevorrichtung eines oder mehrere Geräte aufweisen. Ein Gerät kann beispielsweise eine Steuervorrichtung für einen Aktor oder mehrere Aktoren sein. Zusätzlich oder alternativ hierzu kann das Gerät für den Betrieb eines Sensors oder mehrerer Sensoren ausgelegt sein. Ein Gerät kann z.B. eine speicherprogrammierbare Steuerung (SPS) sein. Die Gerätevorrichtung ist insbesondere zum aktorbasierten Steuern und/oder sensorbasierten Überwachen einer Anlagekomponente ausgelegt, z.B. eines Automaten oder einer Sensoranordnung. Die Gerätevorrichtung kann beispielsweise zum Steuern eines einstellbaren Ventils oder einer Heizvorrichtung eines Kessels oder eines Antriebs für ein Fließband oder eines Roboterarms sein.

Die erfindungsgemäße Gerätevorrichtung weist entsprechend einen Netzwerkanschluss zum Empfangen von Datenpaketen aus dem Datennetzwerk der Automatisierungsanlage auf. Bei dem Netzwerkanschluss kann es sich beispielsweise um einen Ethernet-Netzwerkanschluss handeln, also beispielsweise einen Ethernet-Controller. Der Netzwerkanschluss kann auch einen WLAN-Anschluss (WLAN - Wireless Local Area Network) umfassen.

Ein mit dem Netzwerkanschluss gekoppelter erster Protokollstack für ein erstes Kommunikationsprotokoll ist ebenfalls bereitgestellt. Mittels des Protokollstacks kann eine Kommunikation der Gerätevorrichtung mit der Datenquelle der Datenpakete gemäß dem Kommunikationsprotokoll durchgeführt werden. Die Datenquelle kann z.B. eine andere Gerätevorrichtung oder ein zentraler Steuercomputer sein. Bevorzugt handelt es sich bei dem ersten Protokollstack um einen standardgemäßen OPC-UA-Stack. Mit dem ersten Protokollstack ist eine Applikation gekoppelt, bei der es sich beispielsweise um eine Betriebssoftware der Gerätevorrichtung handeln kann. Die Applikation kann zum Bereitstellen von Gerätefunktionen der Geräteanordnung ausgebildet sein, insbesondere das beschriebene Steuern und/oder Überwachen einer Anlagenkomponente. Die Applikation ist also in vorteilhafter Weise dazu ausgelegt, standardkonform gemäß dem Stand des ersten Produktkommunikationsprotokolls die Datenpakete aus dem Datennetzwerk zu empfangen.

Um nun auch eine nonkonforme Kommunikation zu ermöglichen, ist bei der erfindungsgemäßen Gerätevorrichtung ein zweiter Protokollstack für ein zweites Kommunikationsprotokoll bereitgestellt. Die Applikation ist auch mit dem zweiten Protokollstack gekoppelt. Die Applikation kann also über den zweiten Protokollstack Datenpakete aus dem Datennetzwerk auf der Grundlage eines zweiten Kommunikationsprotokolls empfangen, das nicht mehr zwingend standardkonform sein muss.
Bei der erfindungsgemäßen Gerätevorrichtung ist des Weiteren sichergestellt, dass die Datenpakete aus dem Datennetzwerk in den richtigen Protokollstack gelangen. Hierzu sind sowohl der erste Protokollstack als auch der zweite Protokollstack mit dem Netzwerkanschluss über eine Weicheneinrichtung gekoppelt. Diese Weicheneinrichtung kann beispielsweise ein Programmmodul oder eine Schaltung der Gerätevorrichtung sein. Die Weicheneinrichtung ist dazu ausgelegt, zu den über dem Netzwerkanschluss empfangenen Datenpaketen jeweils eine Zuteilungsinformation zu ermitteln. Die Zuteilungsinformation legt fest, über welchen Protokollstack das jeweilige Datenpaket an die Applikation weiterzuleiten ist. Mit anderen Worten ist die Weicheneinrichtung dazu ausgelegt, in Abhängigkeit von der ermittelten Zuteilungsinformation einen der Protokollstacks auszuwählen und das Datenpaket an den ausgewählten Protokollstack weiterzuleiten.
Durch die Erfindung ergibt sich der Vorteil, dass der standardgemäße OPC-UA-Stack nicht verändert werden muss, um der Applikation zu ermöglichen, die Datenpakete auf nonkonforme, also nicht dem Standard entsprechende, Kommunikationsweise, also gemäß dem zweiten Kommunikationsprotokoll, zu empfangen. Somit kann eine standardkonforme Kommunikation in eine erweiterte Applikation integriert werden.

Der zweite Protokollstack ist für eine anfragelose und/oder bestätigungslose Kommunikation ausgelegt. Eine Anfrage (englisch: Request) ist eine Aufforderungsnachricht an eine Datenquelle, bestimmte Daten auszusenden. Eine Bestätigung (englisch: acknowledgement) bezeichnet eine Quittiernachricht, welche ein Empfängergerät an die Datenquelle nach einem erfolgreichen Empfang einer Daten aussendet. Im Zusammenhang mit OPC UA ist ausschließlich eine anfragebasierte und eine bestätigungsbasierte Kommunikation vorgesehen. Ein Protokollstack für eine anfragelose und/oder bestätigungslose Kommunikation ist beispielsweise gemäß dem UDP (User Datagram Protocol) bereitstellbar. Anfragelose Kommunkation ist z.B. als Multicast möglich. Diese Ausführungsform weist den Vorteil auf, dass die Gerätevorrichtung die Datenpakete empfangen kann, ohne Sendeenergie zum Anfragen und Bestätigen der Daten verbrauchen zu müssen. Sie empfängt also beispielsweise Statusnachrichten ohne eigene Sendeleistung.

Bei dem ersten und dem zweiten Kommunikationsprotokoll muss es sich aber nicht zwingend um verschiedene Kommunikationsprotokolle handeln. Dies kann beispielsweise im Zusammenhang mit der Bereitstellung von Redundanz vorteilhaft sein. In einem weiteren Beispiel weist die Gerätevorrichtung ein erstes und ein zweites Gerät auf. Das erste Gerät ist zum Ausführen eines ersten Teils der Applikation und das zweite Gerät zum Ausführen eines zweiten Teils der Applikation ausgelegt. Der erste Teil der Applikation ist mit dem ersten Protokollstack und der zweite Teil der Applikation mit dem zweiten Protokollstack gekoppelt. Hierdurch ergibt sich der Vorteil, dass die Bearbeitung der Datenpakete auf zwei Geräte aufgeteilt werden kann.

In einem anderen Beispiel weist die Applikation einem Funktionsteil zum Bereitstellen der Gerätefunktionen der Gerätevorrichtung in Abhängigkeit von den Datenpaketen auf. Des Weiteren weist die Applikation einen Spiegelteil auf, der dazu ausgelegt ist, ebenfalls die Gerätefunktionen bereitzustellen und einen aktuellen Zustand des Funktionsteils durch Spiegeln nachzubilden. Spiegeln bedeutet im Zusammenhang mit der Erfindung, dass eine Zustandsänderung im Funktionsteil, die sich aufgrund des Betriebs der Gerätevorrichtung beim Bereitstellen der Gerätefunktionen ergeben kann, auch in dem Spiegelteil vorgenommen oder nachgebildet wird, indem beispielsweise aktuelle Werte von Zustandsvariablen des Funktionsteil zum Spiegelteil übertragen werden oder Variablen des Funktionsteils und Variablen des Spiegelteils durch eine Referenz auf einen gemeinsamen Variablenspeicher realisiert sind. Durch den Spiegelteil ergibt sich eine Redundanz in der Gerätevorrichtung dahingehend, dass bei einem Ausfall oder einem Defekt des Funktionsteils die Gerätefunktionen übergangslos weiter durch den Spiegelteil bereitgestellt werden können. In diesem Beispiel sind der Funktionsteil mit dem ersten Protokollstack und der Spiegelteil mit dem zweiten Protokollstack gekoppelt. Die Weicheneinrichtung kann bei Detektieren eines Defekts des Funktionsteils somit die Datenpakete vom ersten Protokollstack auf den zweiten Protokollstack umleiten.

Anspruchsgemäß ist die Weicheneinrichtung über eine Netzwerkschicht mit dem Netzwerkanschluss gekoppelt. Die Netzwerkschicht ist beispielsweise eine TCP-Schicht (TCP - Transport Control Protocol) eines TCP/IP-Protokollstacks (IP - Internet Protokoll) oder eine IP-Schicht eines IP-Protokollstacks. Mit anderen Worten stellt die Weicheneinrichtung bevorzugt eine unterste Applikationsschicht im TCP/IP-Protokollstack oder eine Transportschicht im ISO-OSI-Referenzmodell dar. Die Weicheneinrichtung kommuniziert in an sich bekannter Weise mit der genannten Netzwerkschicht über eine Kommunikationsschnittstelle der Netzwerkschicht. Von der Erfindung ist aber auch eine Kommunikation über das UDP sowie auch eine von einem TCP/IP-Protokollstack unabhängige Kommunikation mit abgedeckt.
Die Weicheneinrichtung ist hierbei aber in besonderer Weise ausgestaltet. Die Kommunikationsschnittstelle ist bei der Weicheneinrichtung selbst nachgebildet, und zwar an einem Übergangsbereich zum ersten Protokollstack und optional auch zum zweiten Protokollstack. Mit anderen Worten stellt sich die Weicheneinrichtung bezüglich oder aus der Sicht zumindest des ersten Protokollstacks genauso da, wie sich die Netzwerkschicht gegenüber der Weicheneinrichtung darstellt. Mit anderen Worten ist die Weicheneinrichtung transparent dahingehend, dass aus Sicht des ersten Protokollstacks und optional auch aus Sicht des zweiten Protokollstacks sich die Weicheneinrichtung am Übergangsbereich genauso verhält, als handele es sich bei der Weicheneinrichtung um die Netzwerkschicht selbst. Hierdurch ergibt sich der Vorteil, dass keine Anpassung des Protokollstacks an die Weicheneinrichtung nötig ist. Insbesondere kann ein erster Protokollstack verwendet werden, der eigentlich dazu ausgelegt ist, direkt mit einer Kommunikationsschnittstelle der Netzwerkschicht zu kommunizieren.

In einem weiteren Beispiel sind der erste und der zweite Protokollstack durch die Weicheneinrichtung über einen gemeinsamen Socket an einen IP-Protokollstack gekoppelt. Hierdurch ist es vorteilhafterweise ausreichend, die Datenpakete an ein und denselben Socket zu senden. Damit ist für das die Datenpakete aussendende Gerät die Weicheneinrichtung vollkommen transparent, da die Zuteilung der Datenpakete an die beiden Protokollstacks über ein und denselben Socket erfolgt. Insbesondere handelt es sich bei dem Socket um einen TCP-Socket nach dem Standard OPC UA (opc-tcp, z.B. Port Nummer 4840).

In einem weiteren Beispiel ist die Weicheneinrichtung dazu ausgelegt, nach einem Sitzungsaufbau einer Kommunikationsverbindung über einen der Protokollstacks diesen Protokollstack für eine Übertragung von Kommunikationsdaten, die zu der Kommunikationsverbindung gehören, direkt mit der Netzwerkschicht zu verbinden. Mit anderen Worten findet die Entscheidung, ob der erweiterte Pfad über den zweiten Protokollstack beschritten werden soll oder nicht, nur beim Verbindungsaufbau statt. Somit gibt es in der produktiven Kommunikation, wenn die Gerätevorrichtung als Teil der Automatisierungsanlage einen Prozess steuert oder überwacht, keine Performance-Einbußen. Mit anderen Worten empfängt die Weicheneinrichtung nur Datenpakete für einen Verbindungsaufbau, beispielsweise für eine TCP/IP-Verbindung. Die etablierte Kommunikationsverbindung kann dann über einen anderen Socket geführt werden, der nicht von der Weicheneinrichtung überwacht oder ausgewertet wird.
In Bezug auf die Frage, wie die Weicheneinrichtung die Datenpakete den beiden Protokollstacks zuteilen kann, gibt es zwei vorteilhafte Weiterbildungen.

Die anspruchsgemäße Weicheneinrichtung ist dazu ausgelegt, für zumindest eines der Datenpakete als Zuteilungsinformation einen Betriebszustand der Applikation zu ermitteln. Hierdurch kann beispielsweise in der beschriebenen Form von einem Protokollstack zum anderen umgeschaltet werden, wenn ein Funktionsteil der Applikation defekt ist und ein Spiegelteil die Gerätefunktionen bereitstellen oder ausführen soll. Anspruchsgemäß umfasst die Zuteilungsinformation einen anhand der Geräteauslastung oder der Gerätetemperatur ermittelten Betriebszustand der Applikation. Denn falls z.B. eine Überlastung eines Geräts dazu führt, dass ein Applikationsteil auf einem Gerät zu langsam abläuft, können die Datenpakete an das andere Gerät über den anderen Protokollstack zum anderen Applikationsteil geleitet werden.

In einem Beispiel erfolgt die Zuteilung abhängig vom jeweiligen Datenpaket. Die Weicheneinrichtung ist hierbei dazu ausgelegt, einen Bestandteil zumindest eines der Datenpakete als Zuteilungsinformation zu ermitteln. Hierbei ist davon auszugehen, dass jedes Datenpaket an die Applikation adressiert ist, sodass ein von der Applikationsadresse verschiedener Bestandteil des Datenpakets für das Ermitteln der Zuteilungsinformation von der Weicheneinrichtung genutzt wird. Beispielsweise kann eine Endpoint-URL (URL - Uniform Ressource Locator) ausgewertet werden. Zusätzlich oder alternativ dazu kann eine von der Applikation auszuführende Gerätefunktion, die durch beispielsweise durch einen Funktionsnamen identifiziert sein kann, als Zuteilungsinformation ermittelt werden. Hierdurch kann dann beispielsweise zwischen einer Standardfunktion und z.B. einer außerhalb eines Standards implementierten Sonderfunktion unterschieden werden. Entsprechend kann dann zwischen einem Standard-Protokollstack als erstem Protokollstack und einem anderen Protokollstack als zweitem Protokollstack umgeschaltet werden.
Wie bereits ausgeführt, kann der Netzwerkanschluss zum Empfangen der Datenpakete aus einem Funknetzwerk ausgelegt sein. Hierdurch ist die Verwendung der Gerätevorrichtung in einer mobilen Umgebung ermöglicht.

Das erfindungsgemäße Verfahren gemäß des Anspruchs 9 dient zum Betreiben einer Gerätevorrichtung in einer Automatisierungsanlage.
Ein Netzwerk der Gerätevorrichtung empfängt Datenpakete aus einem Datennetzwerk der Automatisierungsanlage, und ein erster Protokollstack stellt ein erstes Kommunikationsprotokoll bereit. Erfindungsgemäß stellt ein zweiter Protokollstack ein zweites Kommunikationsprotokoll bereit, und eine Weicheneinrichtung ermittelt zu den über den Netzwerkanschluss empfangenen Datenpaketen jeweils eine Zuteilungsinformation, wählt in Abhängigkeit von der ermittelten Zuteilungsinformation einen der Protokollstacks aus und leitet das Datenpaket an den ausgewählten Protokollstack weiter. Eine Applikation empfängt das jeweilige Datenpaket über den ausgewählten Protokollstack. So kann die Applikation über einen der Protokollstacks ein Datenpaket beispielsweise gemäß dem ersten Kommunikationsprotokoll, z.B. dem OPC UA-Standard, empfangen und zum anderen über den zweiten Protokollstack gemäß dem zweiten Kommunikationsprotokoll empfangen, wobei diese zweite Datenkommunikation außerhalb des OPC UA-Standards liegen kann.

Weitere Verfahrensbeispiele weisen Merkmale auf, wie sie bereits im Zusammenhang mit den Weiterbildungen der erfindungsgemäßen Gerätevorrichtung beschrieben worden sind. Aus diesem Grund werden diese Verfahrensbeispiele hier nicht noch einmal beschrieben.

Ein weiteres Beispiel umfasst auch eine Automatisierungsanlage zum Steuern eines Prozesses. Bei der Automatisierungsanlage kann es sich um eine Fertigungsanlage zum Steuern eines Produktionsprozesses handeln, bei dem Produkte, beispielsweise Kraftfahrzeuge oder Autoreifen, hergestellt werden. Die Automatisierungsanlage kann auch eine Prozesssteuerungsanlage zum Steuern eines Verfahrensprozesses sein, beispielsweise zur Energiegewinnung aus Kernkraft. Die Automatisierungsanlage kann auch eine Steueranlage zum Steuern eines Systems sein, beispielsweise eines Ampelsystems in einem Verkehrsnetz. Die Automatisierungsanlage kann mehrere Gerätevorrichtungen und beispielsweise auch einen Steuercomputer (z.B. eine speicherprogrammierbare Steuerung) umfassen. Die Gerätevorrichtungen und/oder der Steuercomputer können über ein Datennetzwerk miteinander vernetzt sein.
Die Automatisierungsanlage weist ein Datennetzwerk auf, bei dem es sich beispielsweise um ein Ethernet oder ein Profibus-Netzwerk oder ein drahtloses Netzwerk, beispielsweise ein WLAN, handeln kann. Des Weiteren weist die Automatisierungsanlage zumindest eine Gerätevorrichtung gemäß einer Ausführungsform der Erfindung auf. Bei der Automatisierungsanlage ergibt sich der Vorteil, dass diese gemäß dem Standard OPC UA betrieben werden kann, sodass weiterhin OPC-UA-Kommunikationsszenarien in der Automatisierungsanlage möglich sind und dennoch in der Gerätevorrichtung zusätzliche Gerätefunktionen bereitgestellt werden können, die auf einen Datenaustausch über das Datennetzwerk zurückgreifen können, der außerhalb des Standards liegt, indem der zweite Protokollstack genutzt wird. Auch kann in der Gerätevorrichtung eine Redundanz bereitgestellt werden, was im Standard OPC UA nicht vorgesehen ist. In beiden Fällen kann der OPC-UA-Stack unverändert bleiben, der beispielsweise als der erste Protokollstack bereitgestellt sein kann.

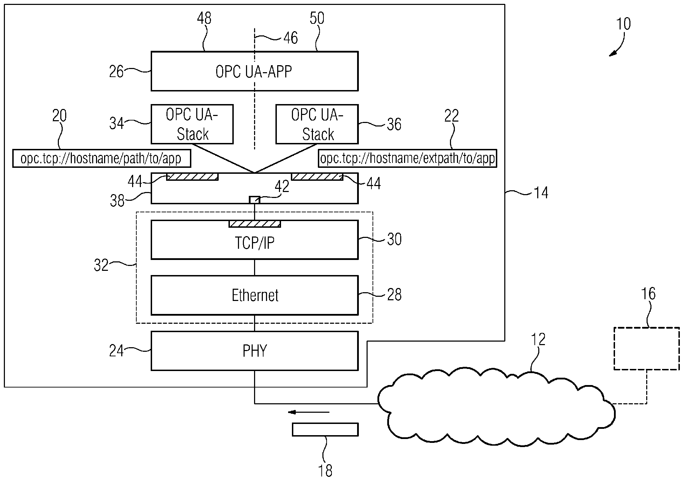

Im Folgenden ist ein Ausführungsbeispiel der Erfindung beschrieben. Hierzu zeigt die einzige Figur in schematischer Darstellung eine Ausführungsform der erfindungsgemäßen Automatisierungsanlage.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt eine automatisierungstechnische Anlage oder Automatisierungsanlage 10 mit einem Datennetzwerk 12, beispielsweise einem IP-Netzwerk oder einem Feldbus, z.B. einen PROFINET-Bus, und mit einer Gerätevorrichtung 14 und mit einer weiteren Anlagenkomponente 16. Bei der Anlagenkomponente 16 kann es sich um eine oder mehrere weitere Gerätevorrichtungen und/oder einen Steuercomputer für die Automatisierungsanlage 10 handeln. In dem gezeigten Beispiel können von der Anlagenkomponente 16 über das Datennetzwerk 12 Datenpakete 18, 20, 22 an die Gerätevorrichtung 14 gesendet werden. Ein Datenpaket kann beispielsweise eine PDU (Protocol Data Unit) eines Kommunikationspakets, beispielsweise eines Ethernet-Datenpakets, sein.

Die Gerätevorrichtung 14 kann an das Datennetzwerk 12 über einen Netzwerkanschluss 24 angeschlossen sein, der beispielweise einen Ethernet-Anschluss und/oder einen Funkempfänger aufweisen kann. Der Netzwerkanschluss 24 kann eine physikalische Schicht (PHY) gemäß dem TCP-IP-Referenzmodell oder ISO-OSI-Referenzmodell darstellen.

Die über den Netzwerkanschluss 24 empfangenen Datenpakete 18, 20, 22 können für eine Applikation 26 der Gerätevorrichtung 14 bestimmt sein. Die Applikation 26 kann beispielsweise eine OPC-UA-Applikation (OPC-UA-App) sein. Die Applikation 26 kann also eine OPC-Application-Layer darstellen. Bei der Applikation 26 kann es sich beispielsweise um eine Steuersoftware oder Betriebssoftware der Gerätevorrichtung 14 handeln. Durch die Applikation 26 können eine oder mehrere Gerätefunktionen der Gerätevorrichtung 14 bereitgestellt sein, beispielsweise das Steuern eines Fließbandes oder einer Pumpe oder eines Ventils oder das Betreiben und Auslesen eines Sensors, beispielsweise eines Temperatursensors oder Drucksensors.

Zum Zuführen oder Übertragen der Datenpakete 18, 20, 22 von dem Netzwerkanschluss 24 zur Applikation 26 können in an sich bekannter Weise zwei Netzwerkschichten 28, 30 bereitgestellt sein. Die Netzwerkschicht 28 kann beispielsweise eine Netzzugangsschicht, beispielsweise eine Ethernet-Schicht sein. Die Netzwerkschicht 30 kann beispielsweise eine IP-Schicht oder Vermittlungsschicht oder TCP/IP-Schicht oder Internetschicht sein. Die Netzwerkschichten 28, 30 können einen netzwerkseitigen Stack 32 darstellen, der aber für die weitere Erläuterung des Ausführungsbeispiels nicht relevant ist.

Die Datenpakete 18, 20, 22 können gemäß einem vorbestimmten Kommunikationsstandard, das heißt gemäß einem ersten Kommunikationsprotokoll an die Applikation 26 adressiert sein. Um die standardgemäß ausgestalteten Datenpakete, hier beispielsweise das Datenpaket 20, gemäß dem ersten Kommunikationsprotokoll zu bearbeiten, kann in der Gerätevorrichtung 14 ein erster Protokollstack 34 bereitgestellt sein, bei dem es sich beispielsweise um einen OPC-UA-Stack handeln kann. Der Protokollstack 34 kann standardgemäß ausgestaltet sein. Die Applikation 26 ist über den Protokollstack 34 mit dem Netzwerkanschluss 24, beispielsweise über die Netzwerkschichten 30, 28, gekoppelt.

Die Applikation 26 kann des Weiteren über einen zweiten Protokollstack 36 mit dem Netzwerkanschluss 24, beispielsweise über die Netzwerkschichten 30, 28, gekoppelt sein. Der Protokollstack 36 muss dabei nicht gemäß dem Standard ausgestaltet sein wie der Protokollstack 34. Beispielsweise kann es sich ebenfalls um einen OPC-UA-Stack handeln, der aber eine nonkonforme Erweiterung des Standards oder eine Abänderung des Standards aufweisen kann. Beispielsweise kann das Datenpaket 22 nonkonform, das heißt nicht gemäß dem Standard, ausgestaltet sein.

Um die von dem Netzwerkanschluss 24 empfangenen und über die Netzwerkschicht 30 weitergeleiteten Datenpakete 18, 20, 22 dem passenden Protokollstack 34, 36 zuzuordnen, kann bei der Gerätevorrichtung 14 eine Weicheneinrichtung 38 bereitgestellt sein. Die Weicheneinrichtung kann beispielsweise in Abhängigkeit von einem Bestandteil der Datenpakete 18, 20, 22 ermitteln, über welchen der Protokollstacks 34, 36 das jeweilige Datenpaket 18, 20, 22 an die Applikation 26 weiterzuleiten ist.

Die Weicheneinrichtung 28 kann beispielsweise über einen Socket 42, beispielsweise einen TCP-Socket, mit der Netzwerkschicht 30 kommunizieren. Die Weicheneinrichtung 28 kann zum Steuern einer Kommunikation mit der Netzwerkschicht 30 eine Netzwerkschnittstelle 40 der Netzwerkschicht 30 ansteuern. Die Weicheneinrichtung 38 kann die Netzwerkschicht 30 für den Protokollstack 34 und optional für den Protokollstack 36 als jeweilige Nachbildung 44, 44 der Netzwerkschnittstelle 40 bereitstellen.

Mit der Weicheneinrichtung 38 ist in dem Kommunikationsweg (PHY - Ethernet-Layer - TCP/IP-Stack - OPC-UA-Stack - OPC-UA-Application-Layer) an geeigneter Stelle ist eine Weiche durch die Weicheneinrichtung 38 eingebracht, die aufgrund der transportierten Daten entscheiden kann, ob der standardgemäße Kommunikationsweg beschritten werden soll oder ein Alternativweg.

Der Ablauf der Zuordnung der Datenpakete 18, 20, 22 zu den Protokollstacks 34, 36 kann wie folgt ausgestaltet sein. Eine PDU tritt über PAY-Ethernet-Layer-TCP/IP-Stack in der Weiche ein. Anhand spezieller Informationen beispielsweise im Header der PDU kann die Weiche entscheiden, ob diese PDU dem Standard-OPC-UA-Stack oder dem spezifischen Stack übergeben werden soll. Die weitere Verarbeitung der PDU findet entsprechend der jeweiligen Stacks statt (OPC-UA-konform oder nonkonform). Der spezifische Stack kann dabei Service-Erweiterungen verarbeiten. Informationen aus dem Standard-OPC-UA-Stack und dem spezifischen Stack schlagen in der Applikation 26 auf, die selbstverständlich darauf ausgerichtet ist, Informationen aus beiden Quellen zu verarbeiten.

In sicheren Szenarien, wenn Verschlüsselung verwendet wird, ist die Menge der Informationen, aufgrund derer die Weiche ihre Entscheidung treffen kann, begrenzt. OPC UA sieht vor, dass bei aktiver Kanalverschlüsselung nur ab dem applikativen Layer die Daten verschlüsselt werden. Insbesondere die verbindungsrelevanten Daten, beispielsweise die Endpoint-URL, sind nicht verschlüsselt und können als Entscheidungskriterium herangezogen werden.

Das bedeutet, dass in sicheren Szenarien die Weiche anhand unterschiedlicher Endpoint-URLs entscheidet, ob der Standard-OPC-UA-Stack oder der spezifische Stack verwendet werden soll.

In dem Beispiel ist veranschaulicht, dass ein Endpoint-URL des OPC-UA-Stacks lauten kann:
opc.tcp://hostname/path/to/app/.

Und ein Endpoint-URL des spezifischen Stacks: opc.tcp://hostname/extpath/to/app/.

Mit dem Element extpath wird der spezifische Stack adressiert, mit path der Standard-OPC-UA-Stack.

In unsicheren Szenarien, wenn keine Verschlüsselung vorliegt, kann direkt beispielsweise der Servicename der angesprochenen Gerätefunktion als Entscheidungskriterium verwendet werden. Das Gleiche gilt für den WebService-Protokoll-Layer, selbst wenn dieser sicher ist. Dies liegt darin begründet, dass der adressierte Service im Webservice aus Sicherheitsgründen (Application-Layer-Firewall) ebenfalls unverschlüsselt im HTTP-Header übertragen werden muss, wie es der Standard WS*Security vorsieht.

Aufgrund der Tatsache, dass die Wegentscheidung in der Weicheneinrichtung 38 sehr früh stattfindet, können der Standard-OPC-UA-Stack und der spezifische Stack auch auf unterschiedlichen Geräten oder Maschinen ausgeführt werden. In der Figur ist dies durch eine Trennlinie 46 symbolisiert. Entsprechend kann die Applikation 26 in einen ersten Applikationsteil 48 und einen zweiten Applikationsteil 50 aufgeteilt sein. Dies ist insbesondere von Vorteil, wenn über die hier beschriebene Erweiterung eine fehlersichere oder hochverfügbare Applikation ausgeprägt ist. Der zweite Applikationsteil 50 kann dann ein Spiegelteil des als Funktionsteil dienenden ersten Applikationsteils 48 dienen. In diesem Fall kann die spezifische Erweiterung mittels des spezifischen Protokollstacks die Fehlertoleranz beziehungsweise die Spiegelung des Produktivservers beinhalten.

Insgesamt zeigt das Beispiel, wie durch die Erfindung eine Service-Layer-Weiche für OPC UA bereitgestellt werden kann.

### Bezugszeichenliste

- 10: Automatisierungsanlage
- 12: Datennetzwerk
- 14: Gerätevorrichtung
- 16: Anlagenkomponente
- 18, 20, 22: Datenpaket
- 24: Netzwerkanschluss
- 26: Applikation
- 28, 30: Netzwerkschicht
- 32: Netzwerkstack
- 34: erster Protokollstack
- 36: zweiter Protokollstack
- 38: Weicheneinrichtung
- 40: Netzwerkschnittstelle
- 42, 44: Nachbildung der Netzwerkschnittstelle
- 46: Trennlinie
- 48: erster Applikationsteil
- 50: zweiter Applikationsteil

## Patentansprüche

1. Gerätevorrichtung (14) für eine Automatisierungsanlage (10), aufweisend:
- einen Netzwerkanschluss (24) zum Empfangen von Datenpaketen (18, 20, 22) aus einem Datennetzwerk (12) der Automatisierungsanlage (10),
- einen mit dem Netzwerkanschluss (24) gekoppelten ersten Protokollstack (34) für ein erstes Kommunikationsprotokoll, wobei der erste Protokollstack (34) ein standardgemäßer OPC-UA-Stack ist
- eine mit dem ersten Protokollstack (34) gekoppelte Applikation (26), und mit
einem zweiten Protokollstack (36) für ein zweites Kommunikationsprotokoll, wobei der zweite Protokollstack (36) für eine anfragelose und/oder bestätigungslose Kommunikation ausgelegt ist,
- die Applikation (26) mit dem zweiten Protokollstack (36) gekoppelt ist und sowohl der erste Protokollstack (34) als auch der zweite Protokollstack (36) mit dem Netzwerkanschluss (24) über eine Weicheneinrichtung (38) gekoppelt sind, welche dazu ausgelegt ist, zu den über den Netzwerkanschluss (24) empfangenen Datenpaketen (18, 20, 22) jeweils eine Zuteilungsinformation zu ermitteln, in Abhängigkeit von der ermittelten Zuteilungsinformation einen der Protokollstacks (34, 36) auszuwählen und das Datenpaket (18, 20, 22) an den ausgewählten Protokollstack (34, 36) weiterzuleiten,
wobei die Weicheneinrichtung (38) über eine Nerzwerkschicht (30), mit dem Netzwerkanschluss (24) gekoppelt ist und bei der Weicheneinrichtung (38) an einem Übergangsbereich zum ersten Protokollstack (34) eine Kommunikationsschnittstelle (40) der Netzwerkschicht (30) nachgebildet ist, wobei
die Weicheneinrichtung (38) dazu ausgelegt ist, für zumindest eines der Datenpakete (18, 20, 22) als Zuteilungsinformation einen Betriebszustand der Applikation (26) zu ermitteln, durch Ermittlung der Geräteauslastung oder der Gerätetemperatur.

2. Gerätevorrichtung (14) nach Patentanspruch 1,
**dadurch gekennzeichnet, dass**
die Gerätevorrichtung (14) ein erstes und ein zweites Gerät umfasst, das erste Gerät zum Ausführen eines ersten Teils (48) der Applikation (26) und ein zweites Gerät zum Ausführen eines zweiten Teils (50) der Applikation (26) ausgelegt ist und der erste Teil (48) mit dem ersten Protokollstack (34) und der zweite Teil (50) mit dem zweiten Protokollstack (36) gekoppelt ist.

3. Gerätevorrichtung (14) nach einem der vorhergehenden Ansprüche,
**dadurch gekennzeichnet, dass**
die Applikation (26) einen Funktionsteil (48) zum Bereitstellen von Gerätefunktionen in Abhängigkeit von den Datenpaketen (18, 20, 22) und einen Spiegelteil (50) aufweist, der dazu ausgelegt ist, einen aktuellen Zustand des Funktionsteils (48) durch ein Spiegeln nachzubilden, wobei der Funktionsteil (48) mit dem ersten Protokollstack (34) und der Spiegelteil (50) mit dem zweiten Protokollstack (36) gekoppelt ist.

4. Gerätevorrichtung (14) nach einem vorhergehenden Ansprüche, **dadurch gekennzeichnet, dass** der erste Protokollstack (34) und der zweite Protokollstack (36) durch die Weicheneinrichtung (38) über einen gemeinsamen Socket (42) an einen IP-Protokollstack gekoppelt sind.

5. Gerätevorrichtung (14) nach Anspruch 6 oder nach Anspruch 6 und 7, **dadurch gekennzeichnet, dass** die Weicheneinrichtung (38) dazu ausgelegt ist, nach einem Sitzungsaufbau einer Kommunikationsverbindung über einen der Protokollstacks, diesen Protokollstack für eine Übertragung von Kommunikationsdaten der Kommunikationsverbindung direkt mit der Netzwerkschicht zu verbinden.

6. Gerätevorrichtung (14) nach einem der vorhergehenden Ansprüche, **dadurch gekennzeichnet, dass** die Weicheneinrichtung (38) dazu ausgelegt ist, für zumindest eines der Datenpakete (18, 20, 22) als die Zuteilungsinformation einen Bestandteil des jeweiligen Datenpakets (18, 20, 22), insbesondere eine Endpoint-URL und/oder eine von der Applikation (26) auszuführende Gerätefunktion, zu ermitteln.

7. Gerätevorrichtung (26) nach einem der vorhergehenden Ansprüche, **dadurch gekennzeichnet, dass** der Netzwerkanschluss (24) zum Empfangen der Datenpakete (18, 20, 22) aus einem Funknetzwerk ausgelegt ist.

8. Automatisierungsanlage (10) zum Steuern eines Prozesses, mit einem Datennetzwerk (12) zum Übertragen von Datenpaketen (18, 20, 22) und zumindest einer Gerätevorrichtung (14) nach einem der vorhergehenden Ansprüche.

9. Verfahren zum Betreiben einer Gerätevorrichtung (14) in einer Automatisierungsanlage (10), mit den Schritten:
- ein Netzwerkanschluss (24) empfängt Datenpakete (18, 20, 22) aus einem Datennetzwerk (12) der Automatisierungsanlage (10),
- ein erster Protokollstack (34), welcher ein standardgemäßer OPC-UA-Stack ist stellt ein erstes Kommunikationsprotokoll bereit,
- ein zweiter Protokollstack (36), der für eine anfragelose und/oder bestätigungslose Kommunikation ausgelegt ist, stellt ein zweites Kommunikationsprotokoll bereit,
- eine Weicheneinrichtung (38) ermittelt zu den über den Netzwerkanschluss (24) empfangenen Datenpaketen (18, 20, 22) jeweils eine Zuteilungsinformation, wählt in Abhängigkeit von der ermittelten Zuteilungsinformation einen der Protokollstacks (34, 36) aus und leitet das Datenpaket (18, 20, 22) an den ausgewählten Protokollstack (34, 36) weiter,
- eine Applikation (26) empfängt das jeweilige Datenpaket (18, 20, 22) über den ausgewählten Protokollstack (34, 36),
wobei die Weicheneinrichtung (38) über eine Netzwerkschicht (30) mit dem Netzwerkanschluss (24) gekoppelt ist und bei der Weicheneinrichtung (38) an einem Übergangsbereich zum ersten Protokollstack (34) eine Kommunikationsschnittstelle (40) der Netzwerkschicht (30) nachgebildet ist
und die Weicheneinrichtung (38) dazu ausgelegt ist, für zumindest eines der Datenpakete (18, 20, 22) als Zuteilungsinformation einen Betriebszustand der Applikation (26) zu ermitteln, durch Ermittlung der Geräteauslastung oder der Gerätetemperatur.

## Claims

1. Appliance apparatus (14) for an automation system (10), having:
- a network connection (24) for receiving data packets (18, 20, 22) from a data network (12) of the automation system (10),
- a first protocol stack (34) for a first communication protocol, which first protocol stack is coupled to the network connection (24), wherein the first protocol stack (34) is a standard OPC-UA stack,
- an application (26) which is coupled to the first protocol stack (34),
and having
a second protocol stack (36) for a second communication protocol, wherein the second protocol stack (36) is designed for zero-request and/or zero-confirmation communication,
the application (26) is coupled to the second protocol stack (36), and both the first protocol stack (34) and the second protocol stack (36) are coupled to the network connection (24) via a switch device (38) which is designed to determine an item of allocation information for each of the data packets (18, 20, 22) received via the network connection (24), to select one of the protocol stacks (34, 36) on the basis of the determined allocation information and to forward the data packet (18, 20, 22) to the selected protocol stack (34, 36),
wherein the switch device (38) is coupled to the network connection (24) via a network layer (30), and a communication interface (40) of the network layer (30) is simulated at a transition area to the first protocol stack (34) in the switch device (38),
wherein the switch device (38) is designed to determine an operating state of the application (26) as allocation information for at least one of the data packets (18, 20, 22) by determining the appliance utilization or the appliance temperature.

2. Appliance apparatus (14) according to Patent Claim 1,
**characterized in that**
the appliance apparatus (14) comprises a first appliance and a second appliance, the first appliance is designed to execute a first part (48) of the application (26) and a second appliance is designed to execute a second part (50) of the application (26), and the first part (48) is coupled to the first protocol stack (34) and the second part (50) is coupled to the second protocol stack (36).

3. Appliance apparatus (14) according to one of the preceding claims,
**characterized in that**
the application (26) has a functional part (48) for providing appliance functions on the basis of the data packets (18, 20, 22) and a mirror part (50) which is designed to simulate a current state of the functional part (48) by mirroring, wherein the functional part (48) is coupled to the first protocol stack (34) and the mirror part (50) is coupled to the second protocol stack (36).

4. Appliance apparatus (14) according to one of the preceding claims, **characterized in that** the first protocol stack (34) and the second protocol stack (36) are coupled to an IP protocol stack by means of the switch device (38) via a common socket (42).

5. Appliance apparatus (14) according to Claim 6 or according to Claims 6 and 7, **characterized in that** the switch device (38) is designed, after establishing a session of a communication connection via one of the protocol stacks, to connect this protocol stack directly to the network layer for the purpose of transmitting communication data relating to the communication connection.

6. Appliance apparatus (14) according to one of the preceding claims, **characterized in that** the switch device (38) is designed to determine, as the allocation information for at least one of the data packets (18, 20, 22), a part of the respective data packet (18, 20, 22), in particular an endpoint URL and/or an appliance function to be carried out by the application (26).

7. Appliance apparatus (26) according to one of the preceding claims, **characterized in that** the network connection (24) is designed to receive the data packets (18, 20, 22) from a radio network.

8. Automation system (10) for controlling a process, having a data network (12) for transmitting data packets (18, 20, 22) and at least one appliance apparatus (14) according to one of the preceding claims.

9. Method for operating an appliance apparatus (14) in an automation system (10), having the following steps:
- a network connection (24) receives data packets (18, 20, 22) from a data network (12) of the automation system (10),
- a first protocol stack (34), which is a standard OPC-UA stack, provides a first communication protocol,
- a second protocol stack (36), which is designed for zero-request and/or zero-confirmation communication, provides a second communication protocol,
- a switch device (38) determines an item of allocation information for each of the data packets (18, 20, 22) received via the network connection (24), selects one of the protocol stacks (34, 36) on the basis of the determined allocation information and forwards the data packet (18, 20, 22) to the selected protocol stack (34, 36),
- an application (26) receives the respective data packet (18, 20, 22) via the selected protocol stack (34, 36), wherein the switch device (38) is coupled to the network connection (24) via a network layer (30), and a communication interface (40) of the network layer (30) is simulated at a transition area to the first protocol stack (34) in the switch device (38), and the switch device (38) is designed to determine an operating state of the application (26) as allocation information for at least one of the data packets (18, 20, 22) by determining the appliance utilization or the appliance temperature.

## Revendications

1. Dispositif d'appareil (14) pour une installation d'automatisation (10), comprenant :
- une connexion réseau (24) pour recevoir des paquets de données (18, 20, 22) depuis un réseau de données (12) de l'installation d'automatisation (10),
- une première pile de protocoles (34) pour un premier protocole de communication couplée à la connexion réseau (24), la première pile de protocoles (34) étant une pile de protocoles selon la norme OPC-UA,
- une application (26) couplée à la première pile de protocoles (34),
et comportant une seconde pile de protocoles (36) pour un second protocole de communication, la seconde pile de protocoles (36) étant conçue pour une communication sans requête et/ou sans confirmation,
dans lequel
- l'application (26) est couplée à la seconde pile de protocoles (36) et la première pile de protocoles (34) ainsi que la seconde pile de protocoles (36) sont couplées à la connexion réseau (24) par l'intermédiaire d'un moyen d'aiguillage (38) qui est conçu de manière à déterminer à chaque fois une information de répartition pour les paquets de données (18, 20, 22) reçus via la connexion réseau (24), à sélectionner en fonction de l'information de répartition déterminée une des piles de protocoles (34, 36) et à transmettre le paquet de données (18, 20, 22) à la pile de protocoles sélectionnée (34, 36),
- le dispositif d'aiguillage (38) est couplé à la connexion réseau (24) par l'intermédiaire d'une couche de réseau (30) et une interface de communication (40) de la couche de réseau (34) est reconstituée dans le dispositif d'aiguillage (38) au niveau d'une zone de transfert vers la première pile de protocoles (34), et
- le dispositif d'aiguillage (38) est conçu de manière à déterminer pour au moins un des paquets de données (18, 20, 22), à titre d'information de répartition, un état de fonctionnement de l'application (26) par une détermination de la charge de l'appareil ou de la température de l'appareil.

2. Dispositif d'appareil (14) selon la revendication 1,
**caractérisé en ce que**
le dispositif d'appareil (14) comprend un premier et un second appareils, le premier appareil est conçu pour exécuter une première partie (48) de l'application (26) et le second appareil est conçu pour exécuter une seconde partie (50) de l'application (26), la première partie (48) étant couplée à la première pile de protocoles (34) et la seconde partie (50) étant couplée à la seconde pile de protocoles (36).

3. Dispositif d'appareil (14) selon l'une des revendications précédentes,
**caractérisé en ce que**
l'application (26) comporte une partie fonctionnelle (48) pour fournir des fonctions d'appareil sur la base de paquets de données (18, 20, 22) et une partie miroir (50), qui est conçue de manière à reconstituer un état en cours de la partie fonctionnelle (48) par une mise en miroir, la partie fonctionnelle (48) étant couplée à la première pile de protocoles (34) et la partie miroir (50) étant couplée à la seconde pile de protocoles (36).

4. Dispositif d'appareil (14) selon l'une quelconque des revendications précédentes,
**caractérisé en ce que**
la première pile de protocoles (34) et la seconde pile de protocoles (36) sont couplées à une pile de protocoles IP par le dispositif d'aiguillage (38) via un point de connexion (42) commun.

5. Dispositif d'appareil (14) selon la revendication 4,
**caractérisé en ce que**
le dispositif d'aiguillage (38) est conçu de manière à, après l'établissement d'une session d'une liaison de communication via une des piles de protocoles, relier directement cette pile de protocoles, pour une transmission de données de la liaison de communication, à la couche de réseau.

6. Dispositif d'appareil (14) selon l'une quelconque des revendications précédentes,
**caractérisé en ce que** le dispositif d'aiguillage (38) est conçu de manière à déterminer, à titre d'information de répartition pour au moins un des paquets de données (18, 20, 22), un élément du paquet de données respectif (18, 20, 22), notamment une URL de point de terminaison et/ou une fonction d'appareil à exécuter par l'application (26).

7. Dispositif d'appareil (14) selon l'une quelconque des revendications précédentes,
**caractérisé en ce que**
la connexion réseau (24) est conçue pour recevoir le paquet de données (18, 20, 22) depuis un réseau radio.

8. Installation d'automatisation (10) pour commander un procédé, comprenant un réseau de données (12) permettant de transmettre des paquets de données (18, 20, 22) et au moins un dispositif d'appareil (14) selon l'une des revendications précédentes.

9. Procédé pour faire fonctionner un dispositif d'appareil (14) dans une installation d'automatisation, comprenant les étapes suivantes :
- une connexion réseau (24) reçoit des paquets de données (18, 20, 22) depuis un réseau de données (12) de l'installation d'automatisation (10),
- une première pile de protocoles (34), qui est une pile de protocoles selon la norme OPC-UA, fournit un premier protocole de communication,
- une seconde pile de protocoles (36) qui est conçue pour une communication sans requête et/ou sans confirmation, fournit un second protocole de communication,
- un dispositif d'aiguillage (38) détermine pour les paquets de données (18, 20, 22) reçus via la connexion réseau (24) à chaque fois une information de répartition, sélectionne en fonction de l'information de répartition déterminée une des piles de protocoles (34, 36) et transmet le paquet de données (18, 20, 22) à la pile de protocoles sélectionnée (34, 36), et
- une application (26) reçoit le paquet de données (18, 20, 22) respectif via la pile de protocoles (34, 36) sélectionnée,
dans lequel le dispositif d'aiguillage (38) est relié à la connexion réseau (24) via une couche de réseau (30) et une interface de communication (40) de la couche de réseau (30) est reconstituée dans le dispositif d'aiguillage (38) au niveau d'une zone de transfert vers la première pile de protocoles (34), et
- le dispositif d'aiguillage (38) est conçu de manière à déterminer pour au moins un des paquets de données (18, 20, 22), à titre d'information de répartition, un état de fonctionnement de l'application (26) par une détermination de la charge de l'appareil ou de la température de l'appareil.
